# EUROPEAN PATENT APPLICATION

(11) **EP 4 810 572 A1**
(43) Date of publication of application: **23.09.2026**
(21) Application number: 24912469.4
(22) Date of filing: 16.12.2024
(51) Int. Cl.: C08L 101/00, C08L 23/00, C08L 53/02, C08L 67/00, C08L 67/02, C08L 75/04, C10L 5/46, C08J 11/06

(54) **RESIN COMPOSITION DERIVED FROM USED SANITARY ARTICLE CONTAINING EXCRETA**

(30) Priority: 28.12.2023 JP 2023223400
(71) Applicant: Unicharm Corporation, Shikokuchuo-shi, Ehime 799-0111 (JP)
(72) Inventor: KONISHI, Takayoshi, Kanonji-shi, Kagawa 769-1602 (JP); KAWABATA, Kuniyoshi, Kanonji-shi, Kagawa 769-1602 (JP)
(74) Representative: Dolleymores
(86) International application number: PCT/JP2024/044364
(87) International publication number: WO 2025/142580

(57) **Abstract**

Provided is a resin composition derived from a used sanitary article containing excreta, which has improved moldability, processability, combustibility, hygiene, and safety, and can be used for various applications suitable for material recycling and thermal recycling. The resin composition derived from a used sanitary article containing excreta contains a soluble component and an insoluble component. The proportion of the soluble component is 80-90 mass%. The proportion of the insoluble component is 10-19 mass%. The proportion of nitrogen atoms contained in the resin composition is less than 0.5 mass%.

## Description

### FIELD

The present invention relates to a resin composition derived from a used sanitary product containing excrement.

### BACKGROUND

Resin compositions from recycled sanitary products or resin molded articles using the same are known. For example, Patent Literature 1 discloses a pulp-containing resin molded article. This resin molded article contains a mixture of 19.8 to 50.5% by weight of pulp fiber, 0.2 to 0.5% by weight of a superabsorbent polymer, and 49 to 80% by weight of a thermoplastic resin different from the superabsorbent polymer. The pulp fiber and superabsorbent polymer contained in this resin molded article can be those recovered from the absorbent body of an absorbent article.

### [CITATION LIST]

### [PATENT LITERATURE]

[PTL 1] Japanese Patent No. 6402910

### SUMMARY

### [TECHNICAL PROBLEM]

The resin molded article described in Patent Literature 1 is formed using a mixture or pellets thereof (hereinafter also referred to as "resin composition"), the mixture being formed by mixing 19.8 to 50.5% by weight of pulp fiber, 0.2 to 0.5% by weight of a superabsorbent polymer, and 49 to 80% by weight of a thermoplastic resin different from the superabsorbent polymer. This resin composition comprises 20.0% by weight or more in total of pulp fiber and superabsorbent polymer, both constituting a component which does not melt by heat and/or does not melt easily by heat (hereinafter also referred to as "non-meltable component"). Thus, when attempting to form a resin molded article using this resin composition, the presence of a large quantity of non-meltable component may make molding and processing difficult.

Furthermore, an non-meltable component either does not contribute to combustion or tends to have a low calorific value. Thus, when attempting to form a heat source such as a solid fuel using such a resin composition, the presence of a large quantity of non-meltable component may result in low combustibility.

In the resin molded article described in Patent Literature 1, when using the pulp fiber and superabsorbent polymer of absorbent articles, they are extracted from absorbent articles generated as production losses. Thus, the absorbent articles are unused and do not comprise excrement. Consequently, the resin composition comprising pulp fiber and superabsorbent polymer is not designed to take into consideration impurities (comprising *E. coli*, etc.) derived from excrement.

However, in reality, the amount of absorbent articles generated from production losses is extremely small as compared to the amount of used absorbent articles containing excrement. Thus, from the perspective of reducing environmental impact, it is important to recycle materials derived from used absorbent articles containing excrement. In such case, in order to make the resin composition derived from used absorbent articles containing excrement a more hygienic, safe, and secure material, it is necessary to maintain a low level of content of impurities derived from excrement.

Thus, there is room for improvement in the resin composition derived from a used sanitary product (including an absorbent article) containing excrement in terms of moldability and processability, combustibility, and hygiene and safety.

An object of the present invention is to provide a resin composition derived from a used sanitary product containing excrement, which has improved moldability and processability, combustibility, and hygiene and safety, and which is suitable for various applications in material recycling and thermal recycling.

### [SOLUTION TO PROBLEM]

One aspect of the present invention is to provide a resin composition derived from a used sanitary product containing excrement, the resin composition comprising a meltable component and an non-meltable component, wherein a proportion of the meltable component is 80 to 90 mass%, a proportion of the non-meltable component is 10 to 19 mass%, and a proportion of nitrogen atoms contained in the resin composition is less than 0.5 mass%.

Another aspect of the present invention is to provide a sound-absorbing material comprising the resin composition described in the aspect above.

Another aspect of the present invention is to provide a solid fuel comprising the resin composition described in one of the aspects above, and having a bulk density of 0.3 to 0.5.

Yet another aspect of the present invention is to provide a container comprising the resin composition described in one of the aspects above.

### [ADVANTAGEOUS EFFECTS OF INVENTION]

According to the present invention, there can be provided a resin composition derived from a used sanitary product containing excrement, which has improved moldability and processability, combustibility, and hygiene and safety, and which is suitable for various applications in material recycling and thermal recycling.

### BRIEF DESCRIPTION OF DRAWINGS

FIG. 1 is a flowchart showing a method of producing a resin composition derived from a used sanitary product containing excrement according to an embodiment.
FIG. 2 is a graph showing one characteristic of a sound-absorbing material using a resin composition derived from a used sanitary product containing excrement according to an embodiment.

### DESCRIPTION OF EMBODIMENTS

The present embodiment relates to the following Aspects.

### [Aspect 1]

A resin composition derived from a used sanitary product containing excrement, the resin composition comprising a meltable component and an non-meltable component, wherein a proportion of the meltable component is 80 to 90 mass%, a proportion of the non-meltable component is 10 to 19 mass%, and a proportion of nitrogen atoms contained in the resin composition is less than 0.5 mass%.

In the present resin composition, the proportion of the meltable component, which has a high calorific value and melts easily, and thus, has high moldability, processability, and combustibility, is 80 mass% or more. The proportion of the non-meltable component, which has a low calorific value and does not melt easily, and thus, has low moldability, processability, and combustibility, is 19 mass% or less. Thus, the present resin composition has excellent moldability, processability, and combustibility. In the present resin composition, the proportion of the non-meltable component, which has low moldability and processability, is 10 mass% or more, and a small amount is present. As a result, the stability of the product shape after molding or processing of the present resin composition can be enhanced, whereby safety is improved. Further, since the proportion of nitrogen atoms derived from excrement is only less than 0.5 mass% in the present resin composition, impurities derived from excrement are extremely low. Thus, the present resin composition is a material with excellent hygiene and safety. In this manner, the present resin composition is a material which is excellent in moldability, processability, and combustibility, as well as in hygiene and safety, and thus, is suitable for material recycling and thermal recycling.

### [Aspect 2]

The resin composition according to Aspect 1, wherein the meltable component comprises a polyolefin as a primary component.

The present resin composition comprises a polyolefin, which has a high calorific value and low melting point as a primary component of the meltable component. Thus, the present resin composition has more excellent moldability, processability, and combustibility. The "primary component" refers to a component which accounts for 50 mass% or more of the meltable component.

### [Aspect 3]

The resin composition is as according to Aspect 1 or 2, wherein the meltable component further comprises a polyester-based resin.

The present resin composition further comprises a polyester-based resin, which is poorly miscible with polyolefin, as the meltable component. Thus, in the present resin composition, an air layer can easily be formed between the polyolefin and the polyester-based resin. As a result, the present resin composition has more excellent combustibility, as well as excellent heat insulation and sound insulation properties for other applications. Polyester-based resins are used, for example, as fibers in the top sheets of absorbent articles of sanitary products.

### [Aspect 4]

The resin composition according to Aspect 3, wherein the polyester-based resin comprises polyethylene terephthalate.

The present resin composition further comprises polyethylene terephthalate, which is poorly miscible with polyolefin, as the meltable component. Thus, in the present resin composition, an air layer can easily be formed between the polyolefin and the polyethylene terephthalate. As a result, the present resin composition has more excellent combustibility, as well as excellent heat insulation and sound insulation properties for other applications.

### [Aspect 5]

The resin composition according to any one of Aspects 1 to 4, wherein the meltable component further comprises at least one of polyurethane and a styrene-containing polymer.

The present resin composition further comprises at least one of polyurethane and a styrene-containing polymer, which are poorly miscible with polyolefin, as the meltable component. Thus, in the present resin composition, an air layer can easily be formed between at least one of the polyurethane and the styrene-containing polymer and the polyolefin. As a result, the present resin composition has more excellent combustibility, as well as excellent heat insulation and sound insulation properties for other applications. Polyurethane and styrene-containing polymers are used, for example, as elastic members and adhesives in absorbent articles for sanitary products.

### [Aspect 6]

The resin composition according to any one of Aspects 1 to 5, wherein the non-meltable component comprises at least one of a cellulosic fiber, a superabsorbent polymer, and an inorganic compound.

The present resin composition comprises at least one of a pulp fiber, a superabsorbent polymer, and an inorganic compound, which are poorly miscible with the meltable component, as the non-meltable component. Thus, in the present resin composition, an air layer can easily be formed between at least one of the pulp fibers, the superabsorbent polymer, and the inorganic compound and the meltable component. As a result, the present resin composition has more excellent combustibility and excellent heat insulation and sound insulation properties for other applications.

### [Aspect 7]

The resin composition according to any one of Aspects 1 to 6, wherein a proportion of ash contained in the resin composition is less than 4 mass%.

In the present resin composition, the proportion of ash, which does not contribute to heat generation and has low moldability, processability, and combustibility, is only less than 4 mass%. Thus, the present resin composition has excellent moldability, processability, and combustibility.

### [Aspect 8]

The resin composition according to any one of Aspects 1 to 7, wherein a proportion of chlorine atoms contained in the resin composition is less than 0.1 mass%.

In the present resin composition, the proportion of chlorine atoms, which pose safety problems during processing and reuse, is only less than 0.1 mass%. Thus, the present resin composition has excellent safety and security.

### [Aspect 9]

The resin composition according to any one of Aspect 1 to 8, wherein the amount of *E. coli* contained in the resin composition is below a detection limit.

In the present resin composition, the amount of excrement-derived *E. coli*, which poses hygiene problems during processing and reuse, is below the detection limit. Thus, since the amount of excrement-derived impurities is extremely low, the present resin composition is more excellent in terms of hygiene and safety.

### [Aspect 10]

The resin composition according to any one of Aspects 1 to 9, wherein a proportion of sulfur atoms contained in the resin composition is less than 0.1 mass%.

In the present resin composition, the proportion of sulfur atoms derived from excrement, which pose hygiene problems during processing and reuse, is only less than 0.1 mass%. Thus, since the amount of impurities derived from excrement is extremely low, the present resin composition is more excellent in terms of hygiene and safety.

### [Aspect 11]

A sound-absorbing material comprising the resin composition according to any one of Aspects 1 to 10.

The present sound-absorbing material is formed using a resin composition comprising 80 to 90 mass% of a meltable component, which has high moldability and processability, and 10 to 19 mass% of an non-meltable component, which has low moldability and processability and is poorly miscible with the meltable component. Thus, in the present sound-absorbing material, an air layer can easily be formed between the meltable component and the non-meltable component. As a result, the present sound-absorbing material can be formed into the desired shape while exhibiting excellent heat insulation and sound insulation properties. Further, since the proportion of nitrogen derived from excrement in the resin composition contained in the present sound-absorbing material is less than 0.5 mass%, impurities derived from excrement are extremely low. Thus, the present sound-absorbing material is hygienic and has excellent safety and security.

### [Aspect 12]

A solid fuel comprising the resin composition according to any one of Aspects 1 to 10, and having a bulk density of 0.3 to 0.5.

The present solid fuel is formed using a resin composition comprising 80 mass% or more of a meltable component, which has a high calorific value and high combustibility, and 19 mass% or less of an non-meltable component, which has a low calorific value and low combustibility, and has a bulk density of 0.3 to 0.5. Thus, the present solid fuel has a very excellent calorific value and combustibility.

### [Aspect 13]

A container comprising the resin composition according to any one of Aspects 1 to 10.

The present container is formed using a resin composition having excellent moldability and processability, comprising 80 mass% or more of a meltable component, which has high moldability and processability, and only 19 mass% or less of an non-meltable component, which has low moldability and processability. Thus, the present container can easily be formed into the desired shape. Further, the present container is formed using a resin composition having a proportion of excrement-derived nitrogen of less than 0.5 mass% and extremely low levels of excrement-derived impurities. Thus, the present container is hygienic and has excellent safety and security. Examples of containers include molded products made using resin compositions, such as plastic bags, trash cans, pallets, buckets, and portable toilets.

The resin composition derived from a used sanitary product containing excrement according to the present embodiment will be described below.

Used sanitary products containing excrement are sanitary products which have been used and which have absorbed excrement (for example, urine, feces, blood). If a used sanitary product containing excrement is disposed of together with a used sanitary product which does not comprise excrement and treated, as a whole, as a used sanitary product containing excrement, then the used sanitary product containing excrement may include the used sanitary product that does not comprise excrement. The used sanitary product which does not comprise excrement includes sanitary products which have been used but which have not absorbed excrement, unused sanitary products, and production loss sanitary products. Examples of sanitary products include disposable diapers, urine pads, incontinence pads, sanitary napkins, disposable underwear, bed liners, and pet liners.

The present resin composition is a resin composition which is composed of substances derived from used sanitary product containing excrement, and comprises a meltable component and an non-meltable component. The meltable component is a component which melts upon heating and/or a component which readily melts upon heating. The non-meltable component is a component which does not melt upon heating and/or a component which does not readily melt upon heating. Dissolving/not dissolving by heat and dissolving easily/not dissolving easily by heat mean dissolving/not dissolving upon heating and dissolving easily/not dissolving easily upon heating, respectively, and the heating temperature is set to 280°C. In other words, a component having a melting point of 280°C or lower is defined as the meltable component, and a component having a melting point exceeding 280°C, or a component which decomposes by heat without melting, is defined as the non-meltable component. Metals are excluded from these components.

The meltable component is not particularly limited as long as it is commonly used as a constituent member of sanitary products and satisfies the above-mentioned conditions for meltable component. Examples of the meltable component include polyolefin-based resins such as polyethylene and polypropylene, polyester-based resins such as polyethylene terephthalate and polybutylene terephthalate, polyamide-based resins such as nylon 6 and nylon 6,6, polyurethane-based resins such as urethane rubber, and styrene-containing polymers such as styrene-butadiene and styrene-ethylene-butadiene-styrene.

The non-meltable component is not particularly limited as long as it is commonly used as a constituent member of sanitary products and satisfies the above-mentioned conditions for non-meltable component. Examples of the non-meltable component include cellulose-based fibers, superabsorbent polymers, and inorganic substances.

Examples of cellulose-based fibers include natural cellulose fibers, regenerated cellulose fibers such as rayon, purified cellulose fibers such as lyocell, and semi-synthetic cellulose fibers such as acetate fibers. Examples of natural cellulose fibers include pulp fibers such as wood pulp fibers and non-wood pulp fibers, and cotton fibers. Examples of wood pulp fibers include softwood pulp fibers and hardwood pulp fibers. Examples of non-wood pulp fibers include straw pulp fibers, bagasse pulp fibers, reed pulp fibers, kenaf pulp fibers, mulberry pulp fibers, bamboo pulp fibers, hemp pulp fibers, and cotton pulp fibers. Examples of cotton fibers include Hirsutum cotton fibers, Barbadense cotton fibers, Arboreum cotton fibers, and Herbaceum cotton fibers. The cotton fibers may also be organic cotton fibers or pre-organic cotton^{™} fibers. Organic cotton fibers refer to cotton certified by GOTS (Global Organic Textile Standard).

Examples of superabsorbent polymers include starch-based, cellulose-based, and synthetic polymer-based superabsorbent polymers. Examples of starch-based or cellulose-based superabsorbent polymers include starch-acrylic acid (salt) graft copolymers, saponified starch-acrylonitrile copolymers, and crosslinked sodium carboxymethylcellulose. Examples of synthetic polymer-based superabsorbent polymers include polyacrylate-based, polysulfonate-based, maleate anhydride-based, polyacrylamide-based, polyvinyl alcohol-based, polyethylene oxide-based, polyaspartate-based, polyglutamate-based, and polyalginate-based polymers.

Examples of inorganic substances include calcium carbonate, barium sulfate, calcium sulfate, barium carbonate, zinc oxide, magnesium oxide, titanium dioxide, talc, silica, clay, kaolin, alumina, and mica.

In the present resin composition, the proportion of the meltable component is 80 to 90 mass%. Thus, in the present resin composition, the proportion of the meltable component, which has a high calorific value and melts easily, and specifically, has high moldability, processability, and combustibility, is 80 mass% or higher. Thus, the proportion is very high. As a result, the moldability, processability, and combustibility of the present resin composition can be enhanced. Thus, the present resin composition can be suitably used in applications requiring a high calorific value, or applications requiring high moldability and processability. The upper limit of 90 mass% is determined in relation to the proportion of other components, such as the non-meltable component.

The proportion of the non-meltable component is 10 to 19 mass%. Thus, in the present resin composition, the proportion of the non-meltable component, which has a low calorific value and does not melt easily, and specifically, has low moldability, processability, and combustibility, is 10 mass% or more, and this component is present, although in a small amount. As a result, the shape stability of products after molding or processing the present resin composition can be enhanced, and safety during use is enhanced. The upper limit of 19 mass% is determined in relation to the proportion of other components, such as the meltable component.

The present resin composition is composed of substances derived from a used sanitary product containing excrement, and thus, can comprise an organic substance (nitrogen compound) present in excrement and having nitrogen atoms. However, in the present resin composition, the proportion of nitrogen atoms is suppressed to less than 0.5 mass%. In this manner, in the present resin composition, the proportion of nitrogen atoms derived from organic substances in the excrement can be suppressed to a very low level, whereby the hygiene and safety of the present resin composition can be enhanced.

Thus, the present resin composition is a material which is excellent in moldability, processability, and combustibility, as well as in hygiene and safety, and therefore, is suitable for material recycling and thermal recycling.

Next, an example of the configuration of a sanitary product (absorbent article) will be described. The sanitary product comprises a top sheet, a back sheet, and an absorbent body arranged between the top sheet and the back sheet. The size of the sanitary product may be, for example, approximately 15 to 100 cm in length and 5 to 100 cm in width, but is not limited to this example. The sanitary product may further comprise other members which are generally found in sanitary products, such as a diffusion sheet, a leak-proof wall, side sheets, an outer sheet, and thread-like or sheet-like elastic member arranged on the leak-proof wall or outer sheet.

Examples of constituent members of the top sheet include liquid-permeable nonwoven fabrics, synthetic resin films with liquid-permeable pores, and composite sheets thereof. Examples of constituent members of the back sheet include liquid-impermeable nonwoven fabrics, liquid-impermeable synthetic resin films, and composite sheets thereof. Examples of constituent members of the diffusion sheet include liquid-permeable nonwoven fabrics. Examples of constituent members of the leak-proof wall and side sheets include water-repellent nonwoven fabrics. Examples of constituent members of the outer sheet include liquid-impermeable and breathable nonwoven fabrics, liquid-impermeable and breathable synthetic resin films, and composite sheets thereof. Examples of constituent members of the elastic member include rubber-based synthetic resins. The type of the nonwoven fabric is not particularly limited, and examples thereof include meltblown nonwoven fabrics, spunbond nonwoven fabrics, airlaid nonwoven fabrics, and air-through nonwoven fabrics. The type of the synthetic resin film is not particularly limited, and known film materials can be used. The materials used for the nonwoven fabrics and synthetic resin films are not particularly limited as long as they can be used for sanitary products. Examples thereof include olefin resins such as polyethylene and polypropylene, polyamide-based resins such as 6-nylon and 6,6-nylon, and polyester-based resins such as polyethylene terephthalate and polybutylene terephthalate. Cellulose-based fibers may also be used as the material for the nonwoven fabrics. To provide breathability, the synthetic resin film may comprise inorganic particles such as calcium carbonate. The materials used for the rubber-based synthetic resins are not particularly limited as long as they can be used for sanitary products. Examples thereof include styrene-butadiene rubber and urethane rubber. These materials for the nonwoven fabrics and the synthetic resin films are synthetic resins and can be referred to as plastic material.

Examples of constituent members of the absorbent body include absorbent materials, such as at least one of cellulose-based fiber and superabsorbent polymer. Examples of cellulose-based fibers include natural cellulose fibers such as pulp fibers including wood pulp fibers, cross-linked pulp fibers, and non-wood pulp fibers, as well as regenerated cellulose fibers and semi-synthetic cellulose fibers. In the case of pulp fibers, the average major diameter of the fibers is, for example, several tens of µm, preferably 20 to 40 µm, and the average fiber length is, for example, several millimeters, preferably 2 to 5 mm. Examples of superabsorbent polymers (SAP) include polyacrylate-based, polysulfonate-based, and maleate anhydride-based superabsorbent polymers. Examples of the size (when dry) of the superabsorbent polymer include an average particle size of, for example, several hundred µm, preferably 200 to 500 µm. The absorbent body may also comprise a core wrap formed of a liquid-permeable sheet.

One surface and the other surface of the absorbent body are joined to the top sheet and the back sheet, respectively, via an adhesive. In a plan view, the portion (peripheral portion) of the top sheet that extends outward from the absorbent body so as to surround the absorbent body is joined, via an adhesive, to the portion (peripheral portion) of the back sheet that extends outward from the absorbent body so as to surround the absorbent body. Thus, the absorbent is enclosed within the joint of the top sheet and the back sheet. The adhesive is not particularly limited, and examples thereof include hot-melt adhesives. Examples of the hot-melt adhesive include pressure-sensitive adhesives or heat-activated adhesives that are primarily rubber-based, such as styrene-ethylene-butadiene-styrene, styrene-butadiene-styrene, styrene-isoprene-styrene, polyurethane, etc., or primarily polyolefin-based, such as polyethylene, etc.

As a preferred aspect of the present embodiment, the meltable component further comprises a polyolefin-based resin as a primary component. The term "primary component" refers to a component whose proportion in the meltable component is 50 mass% or more. "Polyolefin-based resin" refers to a polymer comprising an olefin (for example, ethylene, propylene, butylene, etc.) or diolefin (for example, butadiene, isoprene, etc.) as a constituent element. Examples of polyolefin-based resins include polyethylene and polypropylene. Thus, the present resin composition comprises a large amount of polyolefin-based resin, which has a high calorific value and a low melting point, in the meltable component. As a result, the present resin composition has more excellent moldability, processability, and combustibility.

The proportion of the polyolefin-based resin in the meltable component is preferably 60 mass%, and more preferably 70 mass%, as a lower limit from the viewpoint of moldability, processability, and combustibility. The upper limit is not particularly limited. However, depending on the application of the present resin composition (for example, a heat insulating member or a sound insulating member), when it is preferable for the resin composition to comprise other resins, the upper limit may be, for example, 85 mass%.

As a preferred aspect of the present embodiment, the meltable component further comprises a polyester-based resin. Examples of the polyester-based resin include polyethylene terephthalate and polybutylene terephthalate. Thus, in the present resin composition, since the meltable component further comprises a polyester-based resin, which is poorly miscible with the polyolefin-based resin, an air layer can easily be formed between the polyester-based resin and the polyolefin-based resin. As a result, the present resin composition has more excellent combustibility, and also has excellent heat insulation and sound insulation properties for other applications.

The proportion of the polyester-based resin in the meltable component is preferably 3 mass%, and more preferably 6 mass%, as a lower limit from the viewpoint of heat insulation and sound insulation properties. From the viewpoint of moldability and processability, the upper limit is preferably 15 mass%, and more preferably 12 mass%.

As a preferred aspect of the present embodiment, the meltable component further comprises at least one of a polyurethane-based resin and a styrene-containing polymer. Examples of polyurethane-based resins include polyurethane, and examples of styrene-containing polymers include styrene-ethylene-butadiene-styrene, styrene-butadiene-styrene, and styrene-isoprene-styrene. Thus, in the present resin composition, since the meltable component further comprises at least one of a polyurethane-based resin and a styrene-containing polymer, which are poorly miscible with the polyolefin-based resin, an air layer can easily be formed between at least one of the polyurethane-based resin and styrene-containing polymer and the polyolefin-based resin. As a result, the present resin composition has more excellent combustibility and excellent heat insulation and sound insulation properties for other applications.

The proportion of the at least one of a polyurethane-based resin and a styrene-containing polymer in the meltable component is preferably 3 mass%, and more preferably 6 mass%, as a lower limit from the viewpoint of heat insulation and sound insulation properties. The upper limit is preferably 15 mass%, more preferably 12 mass%, from the viewpoint of moldability and processability.

As a preferred aspect of the present embodiment, the non-meltable component further comprises at least one of a cellulose-based fiber, a superabsorbent polymer, and an inorganic compound. Examples of cellulose-based fibers include pulp fibers. Examples of superabsorbent polymers include polyacrylate-based, polysulfonate-based, and maleate anhydride-based absorbent polymers. Examples of inorganic compounds include calcium carbonate, zinc oxide, magnesium oxide, and alumina. Thus, in the present resin composition, since the non-meltable component comprises at least one of a pulp fiber, a superabsorbent polymer, and an inorganic compound, which are poorly miscible with the meltable component, an air layer can easily be formed between at least one of the pulp fiber, superabsorbent polymer, and inorganic compound and the meltable component. As a result, the present resin composition has more excellent combustibility and excellent heat insulation and sound insulation properties for other applications.

The proportion of the at least one of a pulp fiber, a superabsorbent polymer, and an inorganic compound in the non-meltable component is preferably 80 mass%, and more preferably 90 mass%, as a lower limit from the viewpoint of heat insulation and sound insulation properties. The upper limit thereof is not particularly limited.

As a preferred aspect of the present embodiment, the proportion of ash contained in the resin composition is less than 4 mass%. Thus, in the present resin composition, the proportion of ash, which does not contribute to heat generation and has low moldability, processability, and combustibility, is only less than 4 mass%, and therefore, the present resin composition has excellent moldability, processability, and combustibility.

As a preferred aspect of the present embodiment, the proportion of chlorine atoms contained in the resin composition is less than 0.1 mass%. Thus, in the present resin composition, the proportion of chlorine atoms, which poses safety problems during processing and reuse, is only less than 0.1 mass%, and therefore, the present resin composition has excellent safety and security.

The present resin composition is composed of substances derived from a used sanitary product containing excrement, and thus, can comprise *E. coli* present in the excrement. However, as a preferred aspect of the present embodiment, the amount of *E. coli* contained in the resin composition is below the detection limit. Thus, in the present resin composition, the amount of *E. coli* derived from excrement, which poses hygiene problems during processing and reuse, is below the detection limit. In other words, since the amount of impurities derived from excrement is extremely low, the present resin composition is more excellent in terms of hygiene and safety.

The present resin composition is composed of substances derived from a used sanitary product containing excrement, and thus, can comprise an organic substance (sulfur compound) present in the excrement and having sulfur atoms. However, as the preferred aspect of the present embodiment, the proportion of sulfur atoms contained in the present resin composition is suppressed to only less than 0.1 mass%. Since the proportion of sulfur atoms derived from excrement, which pose hygiene problems during processing and reuse, can be significantly reduced in the present resin composition in this manner, the hygiene and safety of the present resin composition can be enhanced.

Next, a sound-absorbing material comprising the resin composition according to the present embodiment will be described. The resin composition described above itself can be used in the present sound-absorbing material. During use, the resin composition is held in a predetermined area to form the desired shape as a whole. For example, the resin composition can be packed into a resin container, and specifically, held in an area within the container, to form a plate-shaped sound-absorbing material. If necessary, a plurality of containers (sound-absorbing members) each packed with the resin composition can be arranged or stacked in the required numbers for use. An example of the container packed with the resin composition is a polyolefin-based resin bag having dimensions of (400 to 600 mm) × (400 to 600 mm) × (20 to 100 mm). By packing 1 to 5 kg of the resin composition into a bag, a predetermined plate-shaped sound-absorbing material can be formed. Alternatively, for example, the resin composition is packed between two walls, and specifically, held in an area between two walls, to form a wall-shaped sound-absorbing material.

The present sound-absorbing material is formed using a resin composition comprising 80 to 90 mass% of a meltable component, which has high moldability and processability, and 10 to 19 mass% of an non-meltable component, which has low moldability and processability and is poorly miscible with the meltable component. Thus, in the present sound-absorbing material, an air layer can easily be formed between the meltable and non-meltable components. As a result, the present sound-absorbing material can be formed into the desired shape while exhibiting excellent heat insulation and sound insulation properties. Furthermore, since the proportion of nitrogen derived from excrement in the resin composition contained in the present sound-absorbing material is less than 0.5 mass%, the amount of impurities derived from excrement is extremely low. Therefore, the present sound-absorbing material is hygienic and has excellent safety and security.

Since the sound-absorbing material described above is excellent not only in sound insulation but also in heat insulation properties, the sound-absorbing material can also be used as a heat insulating material. The configuration of the present heat insulating material can be the same as that of the sound-absorbing material. As a result, the present heat insulating material has excellent heat insulation and sound insulation properties, is hygienic, and has excellent safety and security.

Next, a solid fuel comprising the resin composition according to the present embodiment will be described. The present solid fuel is formed by extrusion molding using the resin composition described above. The pressure and temperature of the extrusion molding are not particularly limited as long as a solid fuel can be formed. For example, the pressure may be 5 to 50 kg/cm², and the temperature may be 100 to 200°C. The bulk density of the solid fuel is preferably 0.3 to 0.5. When the bulk density is excessively low, the calorific value may excessively decrease, and when the bulk density is excessively high, the heat output may become excessive.

The present solid fuel is formed using a resin composition comprising 80 mass% or more of a meltable component, which has a high calorific value and high combustibility, and 19 mass% or less of an non-meltable component, which has a low calorific value and low combustibility, and has a bulk density of 0.3 to 0.5. Thus, the present solid fuel has significantly excellent calorific value and combustibility.

Next, a container comprising the resin composition according to the present embodiment will be described. Examples of the present container include molded products formed using the resin composition, such as plastic bags, trash cans, pallets, buckets, and portable toilets. Plastic bags are formed by, for example, the inflation method or die method using the resin composition described above. Other molded products are formed by, for example, extrusion molding using the resin composition described above.

The present container is formed using a resin composition having excellent moldability and processability, comprising 80 mass% or more of a meltable component, which has high moldability and processability, and only 19 mass% or less of an non-meltable component, which has low moldability and processability. Thus, the present container can easily be formed into the desired shape. Furthermore, the present container is formed using a resin composition having a proportion of excrement-derived nitrogen of less than 0.5 mass% and extremely low levels of excrement-derived impurities. Thus, the present container is hygienic and has excellent safety and security.

Next, a method of producing a resin composition derived from a used sanitary product containing excrement according to the present embodiment will be specifically described. In the present embodiment, a disposable diaper will be used as an example of the sanitary product.

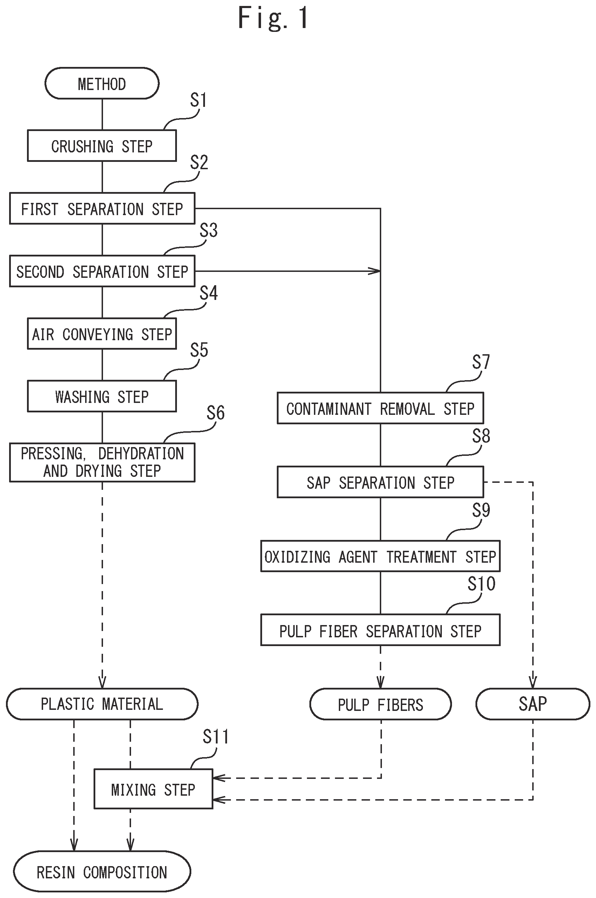

FIG. 1 is a flowchart showing a method of producing a resin composition derived from a used sanitary product containing excrement according to the present embodiment. The present method comprises a first separation step S2, a second separation step S3, and a washing step S5. The resulting plastic material can be used as a resin composition. In the present embodiment, the present method further comprises a crushing step S1, an air conveying step S4, and a pressing, dehydration, and drying step S6. As a result, a further reduction in impurities in the produced plastic material can be achieved. In the present embodiment, the method further comprises a contaminant removal step S7, an SAP separation step S8, an oxidizing agent treatment step S9, a pulp fiber separation step S10, and a mixing step S11. By adding the pulp fiber and the superabsorbent polymer separated in the SAP separation step S8 and the pulp fiber separation step S10 to the plastic material in the mixing step S11, a resin composition with a further adjusted proportion of non-meltable component can be formed. This will be explained in detail below.

In the present embodiment, a used sanitary product to be used is recovered from an external source for reuse (recycling). At that time, a plurality of used sanitary products are sealed in a collection bag to prevent excrement, bacteria, and odors from leaking to the outside. Each individual used sanitary product within the collection bag is collected in a rolled or folded state, with the top sheet on which excrement is deposited facing inward, so that, for example, excrement and bacteria are not exposed on the surface and odors do not spread to the surroundings. The used sanitary product need not necessarily be sealed in a collection bag or rolled up.

The crushing step S1 is a step of crushing the used absorbent articles together with an inactivating aqueous solution comprising an inactivating agent which inactivates the superabsorbent polymer. The crushing step S1 is carried out by a crushing device such as a twin-shaft crusher. Crushing together with the inactivating aqueous solution includes crushing while supplying the used absorbent article to the crushing device together with the inactivating aqueous solution; crushing while placing the used absorbent article in the inactivating aqueous solution stored in the crushing device; and combinations thereof. In the present embodiment, the used absorbent article is crushed while supplying the used absorbent article together with the inactivating aqueous solution to the crushing device. In the present method, when the inactivating aqueous solution is used from the first separation step S2 onward, the inactivating aqueous solution is replenished as appropriate if it becomes insufficient.

In the present embodiment, the collection bag having the used absorbent articles sealed therein is supplied to a receiving device and moved to the crushing device communicating with the lower portion of the receiving device. Simultaneously, the inactivating aqueous solution (for example, an acidic aqueous solution) is supplied to the crushing device via the receiving device. At this time, the inactivating aqueous solution may be supplied from above the used absorbent article so as to pour down onto the used absorbent article. This is from the viewpoint of suppressing the scattering of crushed material (containing excrement-derived substances such as bacteria and odor-causing substances) during crushing. The collection bag is crushed together with the inactivating aqueous solution by the crushing device. As a result, the used absorbent article inside the collection bag is crushed together with the collection bag in the inactivating aqueous solution, thereby producing a crushed material at a size of, for example, 1 to 150 mm. At this time, the superabsorbent polymer is inactivated and dehydrated by the inactivating aqueous solution, resulting in a small particle size. The crushed material, together with the inactivating aqueous solution, is sent to the first separation step S2.

As the inactivating aqueous solution, it is preferable that an aqueous solution of an inorganic acid or an organic acid, i.e., an acidic aqueous solution, be used. When an acidic aqueous solution is used, it is less likely that ash or chlorine will remain on the plastic material, superabsorbent polymer, pulp fiber, or other substances, and the degree of inactivation (magnitude of particle size and specific gravity) can easily be adjusted by pH, as compared to when an aqueous solution of lime or calcium chloride is used. As the organic acid, citric acid, which has a chelating effect and a washing effect, is preferable, and as the inorganic acid, sulfuric acid, which does not comprise chlorine and is inexpensive, is preferable. Inactivation may also be performed using, as the inactivating aqueous solution, an aqueous solution comprising a known polyvalent metal ion source capable of supplying polyvalent metal ions.

The pH of the acidic aqueous solution is preferably 1.0 to 4.0. A pH of 1.0 or higher makes equipment less susceptible to corrosion and can reduce the amount of alkaline chemicals required for neutralization treatment during wastewater treatment. A pH of 4.0 or lower allows for a sufficiently small superabsorbent polymer, thereby enhancing sterilization capabilities. Since pH changes with water temperature, the pH in the present invention refers to the pH measured at an aqueous solution temperature of 120°C. The concentration of the acidic aqueous solution is not particularly limited, and is preferably 0.5 to 4 mass% for citric acid and preferably 0.1 to 2.0 mass% for sulfuric acid.

During the crushing step S1, the heat generated during crushing and/or the heat of the acidic aqueous solution can reduce the joining strength of the adhesive (for example, hot melt adhesive) between constituent members, thereby allowing the constituent members to easily disintegrate from one another. Alternatively, heating the acidic aqueous solution (temperature: 70 to 95°C) can soften the adhesive (for example, hot melt adhesive) used to join the constituent members of the used absorbent article, thereby reducing the joining strength of the adhesive. As a result, the constituent members can easily be disintegrated from one another naturally or with a small impact. The used absorbent article can further be sterilized (disinfected).

Next, the first separation step S2 is a step of separating the mixed liquid comprising the plastic material, inactivated superabsorbent polymer, pulp fiber, excrement, and inactivating aqueous solution supplied from the crushing step S1 into a first fraction comprising the plastic material and a second fraction comprising the inactivated superabsorbent polymer, pulp fiber, excrement, and inactivating aqueous solution. The first separation step S2 is carried out using a separation device such as a screen separator, a pulper separator, or a combination thereof.

In the present embodiment, in the pulper separator, the acidic aqueous solution comprising the crushed material produced in the crushing step S1 is stored and stirred, whereby the crushed material is disintegrated into its constituent materials. The acidic aqueous solution comprising the crushed material (disintegrated constituent materials) is then separated by a screen, and the second fraction comprising the inactivated superabsorbent polymer, pulp fiber, excrement, and acidic aqueous solution serves as an accept and is sent to the contaminant removal step S7. The first fraction such as the collection bag, film, and nonwoven fabric serves as a reject and is sent to the second separation step S3. Substances such as the separated collection bag, film, and nonwoven fabric can be referred to as plastic material. A different acidic aqueous solution not used in the crushing step S1 may be supplied as the acidic aqueous solution to the first separation step S2. At this time, some of the pulp fiber, superabsorbent polymer, and excrement cannot pass through the screen and can remain on the screen along with the first fraction. Some of the collection bag, film, and nonwoven fabric can pass through the screen along with the second fraction.

When the superabsorbent polymer is inactivated and granulated to suppress its water absorption capacity prior to the first separation step S2 (for example, in the crushing step S1) as in the present embodiment, the inactivating aqueous solution (acidic aqueous solution) may not be used, and instead, the inactivating aqueous solution may be largely removed, and then water (aqueous solution) without an inactivating agent may be used, from the first separation step S2 onward. In this case, the water (aqueous solution) without an inactivating agent may be used in any step from the first separation step S2 onward. As a result, the amount of inactivating aqueous solution (and inactivating agent) used can be reduced, thereby reducing the burden on wastewater treatment.

In the present embodiment, in the first separation step S2, the pH of the acidic aqueous solution may be adjusted so as to be maintained within a predetermined range. The predetermined range of pH is defined as a range in which the pH fluctuation is within ±1.0. This ensures that the difference between the specific gravity and size of the superabsorbent polymer and the specific gravity and size of the pulp fiber is within a predetermined range. In this case, a difference within a predetermined range means, for example, that one is within a range of 0.2 to 5 times that of the other. This ensures that the difference in specific gravity between the pulp fiber and the superabsorbent polymer is within a predetermined range, and the difference in size therebetween is also within a predetermined range. As a result, the pulp fiber and superabsorbent polymer can easily be separated from other materials (mainly plastic material) of the used absorbent article, excluding the pulp fiber and superabsorbent polymer, by utilizing the differences in size and specific gravity. The pH adjustment can be performed using an acidic aqueous solution or an alkaline aqueous solution from a pH adjustment device installed in the separation device, based on the pH value measured by a pH sensor installed in the separation device. The pH may be adjusted in the same manner in at least one of the contaminant removal step S7, the second separation step S3, and the SAP separation step S8.

The second separation step S3 is a step of separating the first fraction by applying physical impact thereto into the plastic material and the pulp fiber, superabsorbent polymer, and excrement that remained in the first fraction without being completely separated in the first separation step S2. In other words, in the second separation step S3, the mixture of the plastic material and the remaining pulp fiber, superabsorbent polymer, and excrement is separated into the plastic material and the remaining pulp fiber, superabsorbent polymer, and excrement. The plastic material is recovered thereby.

In the present embodiment, the second separation step S3 involves treating the first fraction with an acidic aqueous solution while applying physical impact to the first fraction to perform separation. Specifically, in the second separation step S3, the mixture (plastic material and residue) from which the pulp fiber, superabsorbent polymer, excrement, and acidic aqueous solution were separated in the first separation step S2 is supplied to the separation device. The separation device comprises a cylindrical part installed horizontally, a plurality of impellers provided inside the cylindrical part, a plurality of acidic aqueous solution supply parts provided on the upper outer circumferential surface of the horizontally installed cylindrical part, and a screen (sieve) provided on the lower outer circumferential surface of the cylindrical part. The cylindrical part has a supply port for the mixture at one end and a discharge port at the other end. The plurality of impellers are arranged at intervals along the central axis of the cylindrical part so that their rotation axes overlap with the central axis of the cylindrical part. The orientation of the blades of the plurality of impellers is adjusted so that they rotate around the central axis of the cylindrical part and create an airflow from one end to the other of the cylindrical part. A plurality of acidic aqueous solution supply parts are arranged at intervals along the central axis and spray fresh acidic aqueous solution downward into the cylindrical part. Preferably, the acidic aqueous solution supply part sprays the acidic aqueous solution in a spray-like manner. The size of the individual openings in the screen (sieve) is such that pulp fiber and superabsorbent polymer (excrement, acidic aqueous solution) can pass through, but the plastic material cannot easily pass through.

The mixture is sprayed with the acidic aqueous solution from each of a plurality of acidic aqueous solution supply parts in the air within the cylindrical part of the separation device, stirred by the rotating impeller blades, and subjected to physical impact by the collision of the impeller blades, while being moved (flowed) from one end to the other of the cylindrical part. During this time, the mixture has dirt washed away and/or is sterilized and bleached by the sprayed acidic aqueous solution. Simultaneously, the pulp fiber and other substances in the mixture are removed by physical impact, and the superabsorbent polymer in the mixture is removed by further inactivation based on the acidic aqueous solution and by physical impact, from the plastic material in the mixture. The removed pulp fiber and superabsorbent polymer are separated (removed) along with the acidic aqueous solution by passing through a screen on the lower side of the cylindrical part.

The plastic material in the mixture from which pulp fiber and superabsorbent polymer have been removed is discharged from the outlet at the other end of the cylindrical part without passing through the screen. Specifically, the superabsorbent polymer and the pulp fiber remaining without being separated in the first separation step S2 are removed, whereby the plastic material with suppressed impurities is produced and recovered. In the plastic material, substances such as sulfur compounds and nitrogen compounds derived from excrement that have not been completely removed in the second separation step S3, although not necessarily in large quantities, can remain. The separated acidic aqueous solution may be reused in the first separation step S2 and the crushing step S1. The acidic aqueous solution is as described above.

The amount of the acidic aqueous solution supplied is not particularly limited as long as it is sufficient to achieve the desired function, and for example, the weight of the acidic aqueous solution relative to the weight of the plastic material may be 5 to 100 times, and preferably 10 to 50 times. The supply rate of the acidic aqueous solution is not particularly limited as long as it is sufficient to achieve the desired function, and may be, for example, 50 to 500 cm³/min, and preferably 80 to 200 cm³/min. When the supply amount or supply rate is excessively low, it will be difficult to obtain the desired effect, and when it is excessively high, there is a risk of damaging the equipment or materials.

In the second separation step S3, as a preferred aspect, the acidic aqueous solution is sprayed onto the mixture. The force of the spray allows for the washing away of any remaining superabsorbent polymer, pulp fiber, and other substances adhering to the plastic material. The spraying atomizes the acidic aqueous solution into fine droplets, making it easier for the solution to reach superabsorbent polymer remaining in the minute parts of the plastic material. Compared to immersing the plastic material in the acidic aqueous solution, the present method allows for a constant supply of fresh acidic aqueous solution to the surface of the plastic material, thereby suppressing variations in the effects of the acidic aqueous solution.

In the second separation step S3, the separation may be carried out by applying physical impact to the first fraction instead of treating the first fraction with an acidic aqueous solution. The mixture is stirred by the blades of a rotating impeller in the air inside the cylindrical part of the separation device, and is subjected to physical impact by the collision of the impeller blades, while being moved (flowed) from one end to the other of the cylindrical part. As this time, the mixture has dirt knocked off by the physical impact. For example, the pulp fiber and superabsorbent polymer in the mixture are removed from the plastic material in the mixture by the physical impact. The removed pulp fiber and superabsorbent polymer are separated (removed) by passing through the screen on the lower side of the cylindrical part.

Alternatively, in the second separation step S3, water or an aqueous solution without an inactivating agent (hereinafter simply referred to as "water") may be sprayed onto the first fraction instead of the acidic aqueous solution. The mixture is sprayed with water from each of a plurality of water supply parts in the air inside the cylindrical part of the separation device, stirred by the rotating impeller blades, and subjected to physical impact by the collision of the impeller blades, while being moved (flowed) from one end to the other of the cylindrical part. During this time, the mixture has dirt washed away by the sprayed water and has dirt knocked off by the physical impact. For example, the pulp fiber and superabsorbent polymer in the mixture are each removed from the plastic material in the mixture by the flow of water and physical impact. The removed pulp fiber and superabsorbent polymer pass through the screen on the lower side of the cylindrical part and are separated (removed) along with the water.

The air conveying step S4 (conveying step) is a step of conveying the plastic material separated in the second separation step S3 to the washing step S5 using air. Specifically, in the air conveying step S4, the separated plastic material, while being dried in the airflow, is conveyed to the next step.

In the present embodiment, in the air conveying step S4, the separated plastic material is conveyed from the separation device to a washing device (which will be described later) in piping connecting the separation device of the second separation step S3 and the washing device of the washing step S5 by air flowing through the piping using a blower. Since the moisture contained in the plastic material is evaporated or blown away into the air at this time, the moisture content of the plastic material is reduced. The moisture content is reduced from, for example, about 95% to about 80%. In addition, the airflow can separate a plurality of plastic materials from each other. As a result, for example, when using a washing liquid in the subsequent washing step S5, the washing liquid can be supplied to the entire surface of each plastic material in a generally uniform manner. Note that the air conveying step S4 is not indispensable, and the separated plastic material may be conveyed by other known conveying means.

The washing step S5 is a step of spraying a washing liquid onto the plastic material separated in the second separation step S3. Specifically, in the washing step S5, substances such as sulfur compounds and nitrogen compounds derived from excrement that have not been completely removed in the second separation step S3 and remained in the plastic material are removed by the washing liquid. Furthermore, other impurities such as pulp fiber and superabsorbent polymer that may remain in trace amounts can also be removed by the washing liquid.

In the present embodiment, in the washing step S5, the plastic material separated in the second separation step S3 (via the air conveying step S4) is supplied to the washing device. The washing device comprises a conveyor (a screw conveyor in the present embodiment) for conveying the plastic material, and a plurality of washing liquid supply parts provided above the conveyor for spraying a washing liquid onto the plastic material being conveyed. The conveyor is inclined upward along the conveying direction (for example, 30°), thereby carrying the washing liquid sprayed onto and spilling from the plastic material to a drain outlet below. The plurality of washing liquid supply parts are spaced apart along the conveying direction of the conveyor. Preferably, the washing liquid supply part sprays the washing liquid in a spray-like manner.

The plastic material is conveyed from one end to the other on a conveyor belt, while the washing liquid is sprayed onto the plastic material from each of the plurality of washing liquid supply parts. At this time, the plastic material is physically stirred by a screw conveyor while the washing liquid is sprayed onto the plastic material. The sprayed washing liquid washes away any substances such as sulfur compounds and nitrogen compounds derived from excrement remaining on the plastic material, and these substances are mixed into the washing liquid. In other words, sulfur compounds and nitrogen compounds remaining on the plastic material are removed. When the washing liquid has a sterilizing effect, the plastic material can be sterilized thereby. When the washing liquid is an oxidizing agent, substances such as sulfur compounds and nitrogen compounds are oxidized and converted into other odorless substances (for example, sulfur (S) and nitrogen (N₂)), which are mixed into the washing liquid and/or are released as gas. In other words, sulfur compounds and nitrogen compounds remaining on the plastic material are removed. Furthermore, the plastic material is sterilized by the washing liquid.

In the washing step S5, the washing liquid is sprayed onto the plastic material. The force of spraying allows for the washing away of sulfur compounds, nitrogen compounds, and other impurities adhering to the surface of the plastic material. The spraying atomizes the washing liquid into fine droplets, making it easier for the washing liquid to reach sulfur compounds and nitrogen compounds remaining in the minute parts of the plastic material. Compared to immersing the plastic material in the washing liquid, the present method ensures a constant supply of fresh washing liquid to the surface of the plastic material, thereby suppressing variations in the effects of the washing liquid (for example, washing and sterilization effects).

The washing liquid may be, for example, an oxidizing agent aqueous solution, which is an aqueous solution comprising an oxidizing agent, or water. The oxidizing agent comprises at least one of ozone and hydrogen peroxide. As the water, depending on the amount of impurities in the plastic material, examples include water at normal temperature and pressure, water or steam at high temperature and/or high pressure, or superheated steam. A sterilizing agent may also be included. In the present embodiment, an oxidizing agent aqueous solution is used, wherein ozone is used as the oxidizing agent from the viewpoint of oxidizing power, sterilizing power, and bleaching power. Specifically, ozonated water, which is prepared by mixing ozone gas into water (or an aqueous solution) such as pure water or tap water, is used as the oxidizing agent aqueous solution. The oxidizing agent aqueous solution may be acidic from the viewpoint of suppressing the deactivation of ozone. Furthermore, when an acidic aqueous solution such as a (dilute) sulfuric acid aqueous solution is used as the inactivating aqueous solution in at least the second separation step S3 among the crushing step S1, the first separation step S2, and the second separation step S3, the oxidizing agent aqueous solution may be acidic from the viewpoint of continuity of each step and effective use of the aqueous solution. In that case, an acidic aqueous solution (for example, a dilute sulfuric acid aqueous solution) into which ozone gas is mixed is used. As the acidic aqueous solution, an acidic aqueous solution used in another step may be reused.

The ozone concentration in the oxidizing agent aqueous solution is not particularly limited, as long as it is sufficient to achieve the desired functions, and specifically, oxidizing power, sterilizing power, and bleaching power against substances such as sulfur compounds (including sulfuric acid in acidic aqueous solution) and nitrogen compounds. For example, the concentration may be 0.2 to 10 ppm, and is preferably 0.5 to 5 ppm. A concentration which is not excessively low allows the desired functions to be achieved, while a concentration which is not excessively high suppresses the corrosion of equipment. The treatment time in the oxidizing agent aqueous solution is not particularly limited, as long as it is sufficient to achieve the desired functions, and is shorter when the ozone concentration in the oxidizing agent aqueous solution is high and longer when the ozone concentration is low, typically 1 to 30 minutes. The product of the ozone concentration (ppm) in the oxidizing agent aqueous solution and the treatment time (minutes) of the treatment step (hereinafter also referred to as the "CT value") may be 0.5 to 200 ppm·min, and preferably 5 to 100 ppm·min. A CT value which is not excessively low allows the desired functions to be achieved, while a CT value which is not excessively high suppresses the corrosion of equipment. As the oxidizing agent aqueous solution, the oxidizing agent aqueous solution used in the oxidizing agent treatment step S9, which will be described later, may be reused in this step after reducing the concentration thereof.

The supply amount of the oxidizing agent aqueous solution is not particularly limited as long as it is sufficient to achieve the desired functions, and the weight of the oxidizing agent aqueous solution relative to the weight of the plastic material may, for example, be 5 to 100 times, and preferably 10 to 50 times. The supply rate of the oxidizing agent aqueous solution is not particularly limited as long as it is sufficient to achieve the desired functions, and may be, for example, 50 to 500 cm³/min, and is preferably 80 to 200 cm³/min. When the supply amount or supply rate is excessively low, it is difficult to obtain the desired effects, and when the supply amount or supply rate is excessively high, there is a risk of damage to equipment or materials.

Regarding sterilization or disinfection, for example, a used disposable diapers contains more than 1 billion general bacteria per ml, and the acidic aqueous solution used up to the second separation step S3 cannot be said to be capable of completely sterilizing the used disposable diaper. Thus, the plastic material (having small amounts of pulp fiber and superabsorbent polymer adhering thereto) separated in the second separation step S3 contains a certain amount of general bacteria (for example, 3,400 general bacteria per ml). This can raise concerns regarding adverse effects on worker safety and the decay and mold growth of the extracted plastic material. Furthermore, there is a strong excrement odor that is thought to be caused by general bacteria. However, by performing the washing step S5 using an oxidizing agent aqueous solution, the general bacteria on the plastic material can be removed to below the detection limit, as is the case with *E. coli*, and the excrement odor can be reduced to substantially imperceptible levels by decomposing the sulfur compounds and nitrogen compounds.

In the present embodiment, the oxidizing agent aqueous solution serving as a washing liquid is sprayed onto the plastic material to remove substances such as sulfur compounds and nitrogen compounds derived from excrement remaining in the plastic material. However, the present embodiment is not limited thereto. For example, a heated liquid (for example, high-temperature water or steam, superheated steam) serving as a washing liquid may be sprayed onto the plastic material to remove impurities such as sulfur compounds, nitrogen compounds, general bacteria, and *E. coli* derived from excrement remaining in the plastic material.

Alternatively, instead of the washing liquid, a heated gas (for example, high-temperature (high-pressure) air) serving as a washing gas may be sprayed onto the plastic material. In this case, examples of the device and spraying method include using the washing gas instead of the washing liquid in the device of the washing step S5, or exposing the plastic material to an atmosphere of the washing gas.

In these cases as well, impurities such as sulfur compounds, nitrogen compounds, general bacteria, and *E. coli* in the plastic material can be decomposed and/or stripped off and thereby removed from the plastic material. In these cases, since no oxidizing agent aqueous solution is used, the process is safe and hygienic, and treatment costs can be reduced because there is no need for wastewater treatment for the oxidizing agent aqueous solution, etc.

Alternatively, depending on the amount of impurities in the plastic material, for example, a treatment such as the washing step S5 described above may not be necessarily performed. In such a case, for example, impurities such as sulfur compounds and nitrogen compounds, general bacteria, and *E. coli* derived from excrement and remaining in the plastic material may be removed by the heating and pressing treatment in the pressing, dehydration, and drying step S6, which will be described later, after simply rinsing with water or doing nothing at all.

The pressing, dehydration, and drying step S6 is a step of pressing, dehydrating, and drying the plastic material treated in the washing step S5. Specifically, in the pressing, dehydration, and drying step S6, a plurality of treated plastic materials are bundled together and pressed as a whole to be dehydrated while being heated and dried.

In the present embodiment, in the pressing, dehydration, and drying step S6, the plastic material treated in the washing step S5 is supplied to a pressing, dehydration, and drying device. The pressing, dehydration, and drying device is a device that presses a plurality of plastic materials together while heating, thereby squeezing out moisture and dehydrating and drying the plastic material. The heating temperature may be 80 to 160°C. If the temperature is excessively high, there is a risk that the pulp fiber that may be included in the plastic material will carbonize, and if the temperature is excessively low, it will be difficult to obtain the drying effect. The heating time depends on the heating temperature, and may be, for example, 5 seconds to 5 minutes, and preferably 10 seconds to 3 minutes. If the time is excessively long, the drying effect will saturate, and if the time is excessively short, it will be difficult to obtain the drying effect. The pressing pressure depends on the heating temperature and heating time, and may be, for example, 0.2 to 4 MPa, and preferably 0.4 to 2 MPa. If the pressure is excessively low, it will be difficult to obtain the dehydration effect, and if the pressure is excessively high, the dehydration effect will saturate. The pressing, dehydration, and drying device softens (and/or melts) the plastic material and extrudes the plastic material out through a plurality of holes (for example, opening diameter: 5 to 15 mm). As a result, the plastic material can be molded into flake or pellet-like shapes, facilitating packaging.

The pressing, dehydration, and drying step S6 also enables impurities such as sulfur compounds, nitrogen compounds, general bacteria, and *E. coli* to be decomposed and/or stripped off to thereby be removed from the plastic material. Since this step does not involve additional steps such as wastewater treatment for the oxidizing agent aqueous solution, etc., the process is safe and hygienic and can reduce treatment costs.

A plurality of plastic materials are bundled together, heated, and pressed by the pressing, dehydration, and drying device, and then sent. As a result, moisture is squeezed out and evaporates, thus producing a dehydrated and dried plastic material. In this manner, a reusable plastic material is produced. At this time, the moisture content of the plastic material is 5 mass% or less, and preferably 3% or less. Pressing and dehydration, and drying may be performed in separate devices.

The dehydration and drying of the plastic material is not limited to the pressing, dehydration, and drying step S6 described above. In cases in which the shape of the plastic material is not to be changed, a general dehydration and drying step may be performed. Such a dehydration and drying step may be, for example, a step of drying the plastic material in a high-temperature atmosphere in a constant-temperature bath or with hot air. The drying temperature may be, for example, 80 to 120°C. The drying time varies depending on the drying temperature, and may be, for example, 10 to 120 minutes.

In this manner, a regenerated (recycled) plastic material is produced as an aspect of the resin composition according to the present embodiment.

The proportion of the non-meltable component in the plastic material (resin composition) can be adjusted by, for example, the second separation step S3 and the washing step S5. In the second separation step S3, for example, suppressing the degree of separation of the non-meltable component such as pulp fiber and superabsorbent polymer can increase the proportion of the non-meltable component in the plastic material. In the washing step S5, for example, suppressing the degree of rinsing with the washing liquid can increase the proportion of the non-meltable component in the plastic material.

In the present embodiment, the mixed liquid comprising the pulp fiber, the superabsorbent polymer, excrement, and the acidic aqueous solution separated in the first separation step S2 is treated in the contaminant removal step S7 through the pulp fiber separation step S10. The regenerated (recycled) pulp fiber and superabsorbent polymer can then be used to adjust the formulation of the resin composition. These steps will be explained in detail below.

In the contaminant removal step S7, a separator (for example, screen separator, cyclone separator) is used to separate foreign matter which could not be completely separated, such as other materials (collection bag, film, nonwoven fabric, elastic member, etc.), from the mixed liquid supplied from first separation step S2 (and the second separation step S3). In the present embodiment, in the contaminant removal step S7, a screen separator (having relatively large mesh openings), a screen separator (having relatively small mesh openings), and a cyclone separator are arranged in this order, and the foreign matter is sequentially separated from the mixed liquid. As a result, a mixed liquid comprising the pulp fiber, superabsorbent polymer, excrement, and an acidic aqueous solution with a small amount of foreign matter is obtained. The mixed liquid is supplied to the SAP separation step S8. Note that if it is not necessary to separate the foreign matter in the mixed liquid (for example, the amount of foreign matter is small, or the foreign matter will be separated in a later step), the contaminant removal step S7 can be omitted.

The SAP separation step S8 separates the superabsorbent polymer from the mixed liquid supplied from the contaminant removal step S7, which comprises pulp fiber, superabsorbent polymer, excrement, and an acidic aqueous solution with a small amount of foreign matter, using a separator (for example, a drum screen separator). In the present embodiment, in the SAP separation step S8, the superabsorbent polymer, excrement, and acidic aqueous solution are separated from the mixed liquid by the drum screen separator. As a result, the superabsorbent polymer, excrement, and acidic aqueous solution are obtained. The mixed liquid comprising the superabsorbent polymer, excrement, and acidic aqueous solution has the excrement and acidic aqueous solution removed therefrom by another separator (for example, an inclined screen separator), and is sterilized, washed, dried, etc., as necessary, to be recovered as the superabsorbent polymer. The pulp fiber (comprising a small amount of superabsorbent polymer) is supplied to the oxidizing agent treatment step S9.

In the oxidizing agent treatment step S9, the superabsorbent polymer in the pulp fiber (comprising a small amount of superabsorbent polymer) having a small amount of foreign matter supplied from the SAP separation step S8 is oxidatively decomposed and solubilized by an oxidizing agent aqueous solution to be removed from the pulp fiber. In the present embodiment, in the oxidizing agent treatment step S9, the pulp fiber is introduced into a treatment tank in which there is stored an oxidizing agent aqueous solution comprising ozone as the oxidizing agent, and the superabsorbent polymer in the pulp fiber is oxidatively decomposed and solubilized to obtain a pulp fiber with extremely few impurities. The pulp fiber with few impurities (comprising the superabsorbent polymer) is supplied to the pulp fiber separation step S10 together with the oxidizing agent aqueous solution.

The type of the oxidizing agent in oxidizing agent treatment step S9 is the same as that of the oxidizing agent in the washing step S5. In the present embodiment, ozone is used as the oxidizing agent from the viewpoint of oxidizing power, sterilizing power, and bleaching power. The ozone concentration in the oxidizing agent aqueous solution is not particularly limited as long as it is a concentration which can decompose the superabsorbent polymer, and may be, for example, 10 to 50 ppm by mass. If the concentration is not excessively low, the superabsorbent polymer can be completely solubilized, and if the concentration is not excessively high, the pulp fiber is not damaged. The treatment time in the oxidizing agent aqueous solution is not particularly limited as long as it is a time which can decompose the superabsorbent polymer, and the treatment time is shorter if the ozone concentration in the oxidizing agent aqueous solution is high and is longer if the ozone concentration is low, and is typically 5 to 300 minutes. The product of the ozone concentration (ppm) in the oxidizing agent aqueous solution and the treatment time (minutes) of the treatment step (hereinafter also referred to as "the CT value") is preferably 100 to 15000 ppm·minute. If the CT value is excessively low, the superabsorbent polymer may not be completely solubilized, and some of the superabsorbent polymer may remain in the pulp fiber. If the CT value is excessively high, the pulp fiber may be damaged.

In the pulp fiber separation step S10, the pulp fiber is separated from the pulp fiber and oxidizing agent aqueous solution supplied from the oxidizing agent treatment step S9 using a separator (for example, a screen separator). The pulp fiber separated and recovered in this manner becomes so-called recycled pulp fiber. The recycled pulp fiber is washed with washing water and extracted.

In the mixing step S11, at least one of the superabsorbent polymer extracted in the SAP separation step S8 and the pulp fiber extracted in the pulp fiber separation step S10 is added to the plastic material that has undergone the pressing, dehydration, and drying step S6, if necessary, whereby a resin composition having the desired proportions of the meltable and non-meltable components is produced. In the present embodiment, first, the content (mass%) of the non-meltable component, and specifically, the pulp fiber and superabsorbent polymer, in the plastic material is measured by the <Method of Measuring Meltable and Non-meltable Components>, which is described later. If the proportion of the non-meltable component is insufficient relative to the desired proportion, the pulp fiber or the superabsorbent polymer, serving as the non-meltable component, is added to the plastic material. If the proportion of the meltable and non-meltable components is neither excessive nor insufficient, the plastic material is used as is as the resin composition. If the proportion of the non-meltable component is greater than the desired proportion, another plastic material that has been extracted separately may be added to the plastic material that has undergone the pressing, dehydration, and drying step S6.

A regenerated (recycled) plastic material having a formulation which has been adjusted using regenerated (recycled) pulp fiber and superabsorbent polymer (or another plastic material) in this manner is produced as another aspect of the resin composition according to the present embodiment.

In the method of producing a resin composition derived from a used sanitary product containing excrement according to the present embodiment, the first fraction is separated in the first separation step S2. At this time, since the superabsorbent polymer, which has absorbed urine, etc., has been inactivated, sodium and nitrogen compounds have been released to the outside along with moisture (dehydration), and the superabsorbent polymer has become granular. Thus, in the second separation step, the superabsorbent polymer of the first fraction can easily be separated from the plastic material by physical impact. Furthermore, even if there is superabsorbent polymer which cannot be completely separated from the plastic material, the contents of sodium and nitrogen compounds in such superabsorbent polymer can be reduced. Furthermore, other substances, excrement and pulp fiber, can also easily be separated from the plastic material by physical impact.

Next, the plastic material separated in the second separation step S3 is subjected to the washing step S5 (oxidizing agent treatment step). At this time, substances such as sulfur compounds and nitrogen compounds derived from excrement which have not been completely separated in the second separation step S3 and remained in the plastic material are oxidized and converted into other odorless substances (for example, sulfur (S) and nitrogen (N₂)), and some or all of these substances are mixed into the oxidizing agent aqueous solution and/or are released as gas. Thus, most of the sulfur compounds and nitrogen compounds remaining in the plastic material are removed. Since the odor-emitting sulfur compounds and nitrogen compounds are converted into other odorless substances and largely removed in this manner, the plastic material can be made less likely to produce unpleasant odors. Furthermore, the plastic material can also be sterilized by the oxidizing agent. In this case, by supplying the oxidizing agent aqueous solution to the plastic material by spraying, substances such as sulfur compounds and nitrogen compounds adhering to the surface of the plastic material can be washed off by the force of spraying. By finely atomizing the oxidizing agent aqueous solution by spraying and supplying the oxidizing agent aqueous solution to the plastic material, the oxidizing agent aqueous solution can easily penetrate into the minute parts of the plastic material. Furthermore, the present method allows for a constant supply of fresh oxidizing agent aqueous solution to the surface of the plastic material as compared to immersing the plastic material in the oxidizing agent aqueous solution, thereby suppressing variations in washing and sterilization effects.

Thus, in the plastic material produced by the present method, since impurities comprising sodium, sulfur, and nitrogen are separated and removed in this manner, impurities in the plastic material can be suppressed. Simultaneous sterilization is also possible. When this plastic material is applied to material recycling or chemical recycling to produce recycled products, the suppression of impurities in the plastic material can reduce its impact on catalysts used in the production process, making it less likely to generate undesirable odors.

In the present method of producing the resin composition, as a preferred aspect, the second separation step S3 comprises a step of spraying an acidic aqueous solution onto the first fraction while applying physical impact to the first fraction to separate the first fraction into the excrement, superabsorbent polymer, and pulp fiber and the plastic material. In this manner, in the present method, an acidic aqueous solution is sprayed onto the first fraction in the second separation step S3. Therefore, the superabsorbent polymer remaining in the plastic material is further inactivated by the acidic aqueous solution, releasing more sodium and nitrogen compounds to the outside (dehydration) and becoming finer granules. As a result, the superabsorbent polymer can be more easily separated from the plastic material by physical impact or flow of acidic aqueous solution. Even if there is superabsorbent polymer which cannot be completely separated from the plastic material, the contents of sodium and nitrogen compounds in such superabsorbent polymer can be further reduced. Furthermore, other substances, excrement and pulp fiber, can also be more easily separated from the plastic material by physical impact or flow of acidic aqueous solution.

As a preferred aspect, the method of producing the present resin composition further comprises the pressing, dehydration, and drying step S6 of pressing, dehydrating, and drying the plastic material treated in the washing step S5. Specifically, by pressing the plastic material treated in the washing step S5 to dehydrate and drying the plastic material, the moisture content in the plastic material can be further reduced. As a result, impurities (for example, substances comprising sulfur or nitrogen that do not produce unpleasant odors) that have been mixed into the moisture (aqueous solution) in steps such as the washing step S5 can be removed from the plastic material along with the moisture.

### <Method of Measuring Meltable and Non-meltable Components>

The meltable and non-meltable components in the resin composition are measured as follows.
(1) First, the meltable and non-meltable components in the resin composition are separated by utilizing the differences in their solubility in various solvents. Specifically, this is performed as follows:
   First, a sample of the resin composition to be measured is dissolved and dispersed in tetrahydrofuran (THF), and then separated by filtration (5 µm filter) into the solvent-soluble components and the solvent-insoluble components. The solvent-soluble components in THF are centrifuged (12,000 rpm × 0.5 h) and separated into the solvent-insoluble components (F11) and the solvent-soluble components. The solvent-soluble components after centrifugation are dissolved and dispersed in methanol, and then separated by filtration (3 µm filter) into the solvent-insoluble components (F12) and the solvent-soluble components (F13).

The solvent-insoluble components in THF are then dissolved and dispersed with hexafluoroisopropanol (HFIP), and separated by filtration (5 µm filter) into solvent-soluble and solvent-insoluble components. The solvent-soluble components in HFIP are then dissolved and dispersed in methanol, and separated by filtration (3 µm filter) into solvent-insoluble components (F21) and solvent-soluble components (F22).

The solvent-insoluble components in HFIP are dissolved and dispersed with heated xylene, and then separated by filtration (200 mesh) into solvent-soluble components and solvent-insoluble components (F31). The solvent-soluble components in xylene are dissolved and dispersed in methanol, and then separated by filtration (3 µm filter) into solvent-insoluble components (F32) and solvent-soluble components (F33).
(2) Next, IR analysis is performed for each of the separated fractions (F11 to F13, F21, F22, F31 to F33, and F41 to F43).
(3) Solution ¹H NMR is performed on the mixture of fraction F12 and fraction F13.
(4) High-temperature ¹³C NMR is performed on fraction F32.
(5) Fraction F31 is carbonized in an electric furnace (570°C, 2 h), the residue is taken as ash, and the weight loss is taken as pulp fiber.
(6) Based on the results of (2) to (5) above, the proportion of the meltable component and the non-meltable component and the qualitative results are determined.

### <Method of Measuring Sound Absorption Properties>

The method of measuring the sound absorption properties of the sound-absorbing material using the resin composition is as follows:
(1) The measurement conditions are as follows.
   Measurement frequency range: 100 to 5000 Hz (1/3 octave band)
   Sound source: Broadband noise (pink noise) in the 100 to 5000 Hz range
   Receiving positions: Three points (microphone heights: 1.2 m, 1.35 m, and 1.5 m above floor level)
   (isolated at a straight-line distance of 1 m or more from the test sample and wall)
   Number of measurements: 3 repetitions at each receiving point

### Test Sample Arrangement

i) The longer side of each test sample (approximately 3 kg/bag) is oriented parallel to the longer side of the test sample arrangement area and arranged close to the north side of the area.
   Number of test samples: 35 bags (9.42 m²), temperature and humidity during testing: 10°C, 71%
ii) The longer side of each test sample (approximately 4 kg/bag) is oriented parallel to the longer side of the test sample arrangement area and arranged close to the south side of the area.
   Number of test samples: 35 bags (9.42 m²), temperature and humidity during testing: 10°C, 72%
iii) The longer side of each test sample (approximately 4 kg/bag) is oriented perpendicular to the longer side of the test sample arrangement area and arranged close to the north side of the area.
   Number of test samples: 36 bags (9.515 m²), temperature and humidity during testing: 10°C, 71%

This measurement method conforms to JIS-A-1409 (Method of measurement of sound absorption coefficient in a reverberation room). The reverberation room has a substantially rectangular floor shape, the test sample arrangement area is a rectangular region located at the center of the reverberation room and spaced from the walls, and a speaker is located on the east side of the test sample arrangement area.

(2) Measurements are taken for the test sample arrangement (i) to (iii), and the average of the measurements is taken as the final measurement value.

### <Method of Measuring Sulfur, Nitrogen, Aluminum, and Chlorine Contents>

The method of measuring the sulfur, nitrogen, aluminum, and chlorine contents (mass%) of resin composition and solid fuel is as follows.
(1) An energy-dispersive X-ray analyzer (EDX: EDX-7200, manufactured by Shimadzu Corporation) is prepared.
(2) The resin composition or solid fuel to be measured is dried (120°C for 60 minutes), a sample in an amount sufficient for measurement and suitable for placement on the sample stand of the analyzer is taken from the dried resin composition or solid fuel and the sample is fixed to the sample stand.
(3) The sulfur, nitrogen, aluminum, and chlorine contents in the sample are measured using the analyzer.
(4) The measurement results of the five samples are averaged to determine the final contents of sulfur, nitrogen, aluminum, and chlorine in the resin composition.

### <Method of Measuring Calorific Value and Mass Fractions of Moisture and Ash>

The calorific value (MJ/kg) of the resin composition and solid fuel to be measured is determined by the method in accordance with JIS Z 7302-2. The mass fraction (%) of moisture in the resin composition and solid fuel to be measured is determined by the method in accordance with JIS Z 7302-3. The mass fraction (%) of ash in the resin composition and solid fuel to be measured is determined by the method in accordance with JIS Z 7302-4.

### <Method of Measuring Bulk Density>

The bulk density of the resin composition and solid fuel is determined as follows. First, the resin composition or solid fuel to be measured is placed in a container of a fixed volume (for example, 1 L) until the container is filled to capacity, and the total mass of the resin composition or solid fuel is measured. The bulk density of the resin composition or solid fuel to be measured is then determined by dividing the measured mass by the mass of water equal to the volume of the container.

### <Method of Measuring E. coli>

The method of measuring *E. coli* in the resin composition and solid fuel is as follows.
(1) In a 1 liter beaker, 500 g of an aqueous dispersion of the resin composition or solid fuel to be tested having a solid content concentration of 5.0 mass% is prepared.
   - When the resin composition or solid fuel is present in a dry state
      The aqueous dispersion can be formed by mixing the resin composition or solid fuel (25.0 g as solid content) with deionized water (in an amount that results in a total amount of 500.0 g).
   - When the resin composition or solid fuel is present as an aqueous solution (for example, when the resin composition or solid fuel is recovered as an aqueous solution in the method of producing the resin composition or solid fuel), and the solid content concentration of the resin composition or solid fuel is 5.0 mass% or more
      By a method, for example, adding deionized water to the aqueous solution, an aqueous dispersion of the resin composition or solid fuel with a solid content concentration of 5.0 mass% can be prepared.
   - When the resin composition or solid fuel is present in an aqueous solution, and the solid content concentration of the resin composition or solid fuel is less than 5.0 mass%
      By filtration, the solid content concentration of the resin composition or solid fuel can be adjusted to 5.0 mass%. Alternatively, the aqueous solution itself can be used as an aqueous dispersion, and the inoculation amount of the serial dilution sample, which will be described later can be increased (for example, when the solid content concentration of the resin composition or solid fuel is 2.5 mass%, the inoculation amount can be doubled).
(2) The aqueous dispersion is stirred using an overhead stirrer at a rotation speed of 300 rpm for 15 minutes.
(3) 50 mL of the aqueous dispersion, stirred using an overhead stirrer, is charged into a sterile bag equipped with a filter (LMS Co., Ltd. sterile bag with homogenizer filter) and stirred for 5 minutes.
(4) The aqueous dispersion filtered using a sterile bag with a filter is dispensed into sterile test tubes and serially diluted 10-fold to 10⁻⁹, and then dispensed into sterile test tubes to prepare the serial dilution samples.
(5) The *E. coli* count is measured by pour plate method.
   Specifically, 1 mL of the serial dilution sample and a standard agar medium (Shiotani MS Co., Ltd., 399-02201 EMB agar medium "Daigo" for *E. coli* testing, 15 to 20 g) are charged into a petri dish and cultured by the pour plate method at 35°C for 48 hours.
(6) The *E. coli* count is determined by counting the number of colonies which have grown after culturing.
   If the number of colonies is zero in all the serial dilution samples, serially diluted 10-fold up to 10⁻⁹, it is determined that the target bacteria are "not detected," i.e., the number of general viable bacteria detected by pour plate method is below the detection limit. In other words, the number of general viable bacteria is 0 cfu/g.
(7) If colonies of intestinal bacteria or general viable bacteria are formed after culturing, the types of bacteria can be identified. Identification can be performed by a biochemical characterization method.

### EXAMPLES

The present invention will be described below based on Examples, but the present invention is not limited to these Examples.

### (1) Samples

Example 1: The resin composition of Example 1 was obtained by performing the crushing step S1 through the pressing, dehydration, and drying step S6 of the method of producing a resin composition derived from a used sanitary product containing excrement according to the present embodiment, using a used disposable diaper containing excrement as raw material. The acidic aqueous solution in the second separation step S3 was a 0.1 mass% sulfuric acid aqueous solution, and the washing liquid in the washing step S5 was water.

Example 2: The sound-absorbing material of Example 2 was formed using the resin composition of Example 1. The sound-absorbing material was fabricated by packing 4 kg of the resin composition into a polyethylene resin bag measuring 570 mm × 440 mm × 50 mm. Thirty-six bags of such sound-absorbing material were fabricated.

Example 3: The solid fuel of Example 3 was formed by extrusion molding using the resin composition of Example 1 (10 kg/cm², 150°C, 10 min).

### (2) Evaluation Methods

### (a) Formulation of Resin Composition

For the resin composition of Example 1, the meltable component and non-meltable component were measured by <Method of Measuring Meltable and Non-meltable Components> described above.

### (b) Sound Absorption Properties of Sound-Absorbing Material

The sound-absorbing properties of the following sound-absorbing material were measured by <Method of Measuring Sound Absorption Properties> described above.
·Sound-absorbing material of Example 2
·Commercially available 24K glass wool (high-performance glass wool with a density of 24 kg per 1 m²) - 50 mm thick sound-absorbing material (Comparative Example 1)
·Commercially available 24K glass wool, - 25 mm thick sound-absorbing material (Comparative Example 2)
·Commercially available rock wool sound-absorbing board -12 mm thick (Comparative Example 3)

### (c) Formulation, etc. of Solid Fuel

For the resin composition of Example 1 and the solid fuel of Example 3, the calorific value, mass fractions of moisture and ash, contents of sulfur, chlorine, nitrogen, and aluminum, bulk density, and *E. coli* were measured by <Method of Measuring Calorific Value and Mass Fractions of Moisture and Ash>, <Method of Measuring Sulfur, Nitrogen, Aluminum, and Chlorine Contents>, <Method of Measuring Bulk Density>, and <Method of Measuring *E. coli*> described above.

### (3) Evaluation Results

### (a) Formulation of Resin Composition

Table 1 below shows the results of the measurement of the formulation of the resin composition of Example 1. In the resin composition of Example 1, polypropylene and polyethylene, each of which was a polyolefin-based resin constituting the meltable component, were 46.2 mass% and 17.0 mass%, respectively. Polyethylene terephthalate, which was a polyester-based resin constituting the meltable component, was 9.1 mass%. Styrene-containing polymer (styrene), which constituted the meltable component, was 1.9 mass%. Hydrocarbon, which can be considered to comprise polyurethane, which constituted the meltable component, was 8.2 mass%. Butadiene and oligomers and additives, which were other substances and constituted the meltable component, were 0.9 mass% and 0.3 mass%, respectively. Pulp fiber (cellulose) and inorganic compound (calcium carbonate), each of which constituted the non-meltable component, were 14.7 mass% and 1.7 mass%, respectively.

Thus, the meltable component was 83.6 mass%, and the non-meltable component was 16.4 mass%. The proportion of the polyolefin-based resin in the meltable component was 75.6 mass%, and the proportion of the pulp fiber (cellulose) and inorganic compound (calcium carbonate) in the non-meltable component was approximately 100 mass%.

As will be described later, the resin composition of Example 1 had extremely low levels of sulfur, chlorine, nitrogen, and aluminum, and *E. coli* was not detected.

**[Table 1]**

| Formulation | Separated fraction | Compositional proportion (mass%) |
|---|---|---|
| | | Example 1 |
| Polypropylene | F32 | 46.2 |
| Polyethylene | | 17.0 |
| Cellulose | F31 | 14.7 |
| Calcium carbonate | F31 | 1.7 |
| Polyethylene terephthalate | F21 | 9.1 |
| Hydrocarbon | F12, F13 | 8.2 |
| Butadiene | | 0.9 |
| Styrene | | 1.9 |
| Oligomers, additives | F11, F22, F33 | 0.3 |
| Total | | 100.0 |

### (b) Sound Absorption Properties of Sound-Absorbing Material

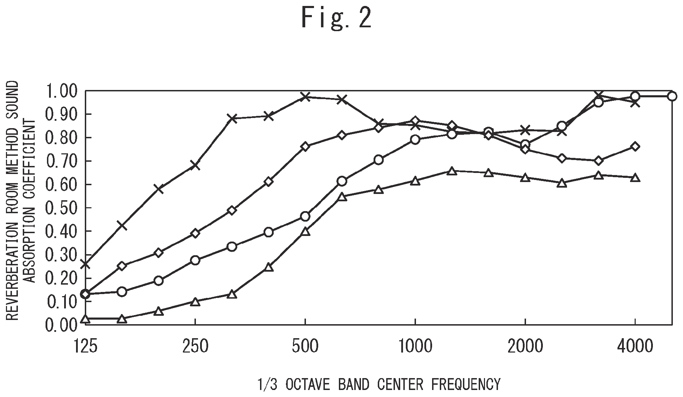

FIG. 2 shows the measurement results of the sound absorption properties of the sound-absorbing material of Example 2. In the graph in the drawing, the vertical axis represents the reverberation room method sound absorption coefficient, and the horizontal axis represents the 1/3 octave band center frequency (Hz). Circles represent the results for Example 2, crosses represent the results for Comparative Example 1 (glass wool 24K - thickness 50 mm), diamonds represent the results for Comparative Example 2 (glass wool 24K - thickness 25 mm), and triangles represent the results for Comparative Example 3 (rock wool board - thickness 12 mm).

The graph shows that the sound-absorbing material of Example 2 exhibited a better sound absorption coefficient than the rock wool board of Comparative Example 3, and at frequencies higher than 1000 Hz, exhibited characteristics equivalent to or better than the glass wool of Comparative Examples 1 and 2.

### (c) Formulation, etc. of Solid Fuel

The results of the measurements of the formulation, etc. of the resin composition of Example 1 and the solid fuel of Example 3 are shown in Table 2 below. The resin composition of Example 1 had an extremely high calorific value of 39.1 MJ/kg, and the contents of moisture, ash, sulfur, chlorine, nitrogen, and aluminum were extremely low at 0.7 mass%, 2.68 mass%, 0.022 mass%, 0.020 mass%, less than 0.30 mass%, and less than 0.10 mass%, respectively, and *E. coli* was not detected. The bulk density was 0.199, which was relatively low. Thus, except for the bulk density, the resin composition possessed characteristics which conformed not only to Grade A of type RPF but also to type RPF-coke in the RPF (Refuse-derived paper and plastics-densified fuel) quality standards (JIS Z7311:2010 "Refuse-derived paper, plastics, etc. solid fuel (RPF)").

The solid fuel of Example 3 had an extremely high calorific value of 36.5 MJ/kg, and the contents of moisture, ash, sulfur, chlorine, nitrogen, and aluminum were extremely low at 0.7 mass%, 2.08 mass%, 0.015 mass%, 0.039 mass%, less than 0.30 mass%, and less than 0.10 mass%, respectively, and *E. coli* was not detected. The bulk density was 0.392. Thus, the solid fuel possessed characteristics which conformed not only to Grade A of type RPF but also to type RPF-coke in the RPF quality standards.

**[Table 2]**

| Analysis item | Example 3 | Example 1 |
|---|---|---|
| | Solid fuel | Resin composition |
| Calorific value (MJ/kg) | 36.5 | 39.1 |
| Moisture (mass%) | 0.7 | 0.7 |
| Ash (mass%) | 2.08 | 2.68 |
| Sulfur (mass%) | 0.015 | 0.022 |
| Chlorine (mass%) | 0.039 | 0.020 |
| Nitrogen (mass%) | less than 0.30 | less than 0.30 |
| Aluminum (mass%) | less than 0.10 | less than 0.10 |
| Bulk specific gravity | 0.392 | 0.199 |
| *E. coli* | Not detected | Not detected |

| | | |
|---|---|---|
| * Note that "X" in "less than X" indicates the lower limit of quantification. "Not detected" indicates that the value is less than the lower limit of quantification. | | |

The resin composition of the present invention and products using the same are not limited to the embodiments described above, and can be appropriately combined or modified without departing from the object and spirit of the present invention.

### DESCRIPTION OF REFERENCE SIGNS

- S1: crushing step
- S2: first separation step
- S3: second separation step
- S4: air conveying step
- S5: washing step
- S6: pressing, dehydration, and drying step
- S7: contaminant removal step
- S8: SAP separation step
- S9: oxidizing agent treatment step
- S10: pulp fiber separation step
- S11: mixing step

## Claims

1. A resin composition derived from a used sanitary product containing excrement, the resin composition comprising:
a meltable component and an non-meltable component, wherein
a proportion of the meltable component is 80 to 90 mass%,
a proportion of the non-meltable component is 10 to 19 mass%, and
a proportion of nitrogen atoms contained in the resin composition is less than 0.5 mass%.

2. The resin composition according to claim 1, wherein the meltable component comprises a polyolefin-based resin as a primary component.

3. The resin composition according to claim 1 or 2, wherein the meltable component further comprises a polyester-based resin.

4. The resin composition according to claim 3, wherein the polyester-based resin comprises polyethylene terephthalate.

5. The resin composition according to any one of claims 1 to 4, wherein the meltable component further comprises at least one of polyurethane and a styrene-containing polymer.

6. The resin composition according to any one of claims 1 to 5, wherein the non-meltable component comprises at least one of a cellulose-based fiber, a superabsorbent polymer, and an inorganic compound.

7. The resin composition according to any one of claims 1 to 6, wherein a proportion of ash contained in the resin composition is less than 4 mass%.

8. The resin composition according to any one of claims 1 to 7, wherein a proportion of chlorine atoms contained in the resin composition is less than 0.1 mass%.

9. The resin composition according to any one of claims 1 to 8, wherein *E. coli* contained in the resin composition is below a detection limit.

10. The resin composition according to any one of claims 1 to 9, wherein a proportion of sulfur atoms contained in the resin composition is less than 0.1 mass%.

11. A sound-absorbing material, comprising the resin composition according to any one of claims 1 to 10.

12. A solid fuel, comprising the resin composition according to any one of claims 1 to 10, and having a bulk density of 0.3 to 0.5.

13. A container, comprising the resin composition according to any one of claims 1 to 10.
